Europäisches Patentamt

(19) European Patent Office

Office européen des brevets

(11) EP 0 790 396 A2

(12) EUROPEAN PATENT APPLICATION

(43) Date of publication:
20.08.1997 Bulletin 1997/34

(51) Int. Cl.6: F02D 41/38, F02D 41/22

(21) Application number: 97102210.8

(22) Date of filing: 12.02.1997

(84) Designated Contracting States:
DE FR GB

(30) Priority: 13.02.1996 JP 25629/96

(71) Applicant:
TOYOTA JIDOSHA KABUSHIKI KAISHA
Aichi-ken 471 (JP)

(72) Inventors:
• Iwai, Akira
  Toyota-shi, Aichi-ken 473 (JP)
• Hidaka, Shigeki
  Kariya-shi, Aichi-ken 448 (JP)

(74) Representative: Pellmann, Hans-Bernd, Dipl.-Ing.
Patentanwaltsbüro
Tiedtke-Bühling-Kinne & Partner
Bavariaring 4
80336 München (DE)

(54) Apparatus for detecting misfires in an electronic controlled diesel engine

(57) An apparatus for detecting misfires in an electronic controlled diesel engine (1). The engine (1) has a crankshaft (10), a combustion chamber (2), an injection nozzle (7) for injecting fuel into the combustion chamber (2), an injection pump (8) driven by the crankshaft (10)and used to pressurize and discharge the fuel toward the nozzle (7). A controller (71) controls the timing of the fuel injected from the injection nozzle by electrically controlling a timing altering device (17). The controller (71) detects either one of a difference between or ratio of the time length of a first set and the time length of a second set of pulse signals that is output from the injection pump (8). The order of the first pulse in each set is predetermined. The controller (71) further compares the sum of the time lengths of the pulses of the first set and the sum of the time lengths of the pulses in the second set with each other to judge whether a misfire has occurred in the diesel engine (1). The controller (71) changes the predetermined order of the first pulse in the first and second sets of pulse signals in accordance with the amount of change in the injection timing.

Fig.1

EP 0 790 396 A2

## Description

The present invention relates to electronic controlled engines that control fuel injection with a computer in accordance with the operating state of the engine. More particularly, the present invention pertains to an apparatus for detecting misfires in a diesel engine.

Diesel engines are generally provided with a fuel injection apparatus for injecting fuel into a combustion chamber. A typical injection apparatus includes a fuel injection nozzle and a fuel injection pump. The fuel injection pump, which is operated in cooperation with the engine, sends pressurized fuel to the injection nozzle. The fuel is then injected into the combustion chamber through the nozzle. The amount of fuel injected from the nozzle and the timing of the injection must be controlled in accordance with the operating state of the engine.

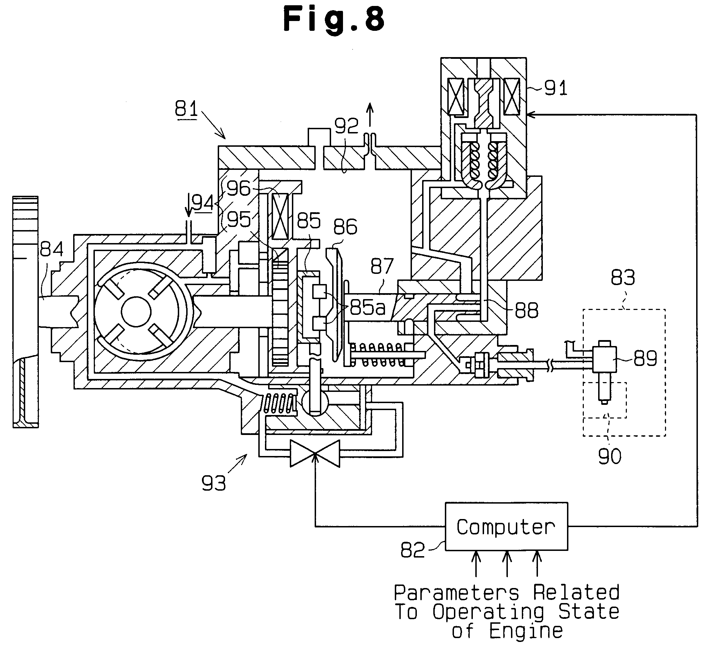

Electronically controlled engines are typically provided with an injection control apparatus that electrically controls the injection amount and the injection timing of the fuel in accordance with the operating state of the engine. As shown in Fig. 8, a typical control apparatus includes an injection pump 81 and a computer 82, which controls the pump 81. The injection pump 81 has a drive shaft 84, which is driven by a crankshaft of an engine 83. A roller ring 85 having a plurality of cam rollers 85a is fit onto the drive shaft 84. The cam rollers 85a are engaged with a cam plate 86, which is rotated by the drive shaft 84. The cam plate 86 moves back and forth as the cam plate 86 rotates and follows the cam rollers 85a. This rotates and reciprocally moves a plunger 87 that is connected to the cam plate 86. The movement of the plunger 87 pressurizes fuel in a pressure chamber 88. The highly pressurized fuel is then discharged from the injection pump 81 and injected into a combustion chamber 90 through an injection nozzle 89.

The computer 82 computes a target value for the injection amount and injection timing of the fuel based on parameters that are related to the operating state of the engine 83. The computer 82 opens an electromagnetic spill valve (or spill ring) 91, which is provided in the injection pump 81. This releases the fuel in the pressure chamber 88 into a fuel chamber 92 and controls the period during which fuel is discharged from the injection pump 81, that is, the amount of fuel injected from the injection nozzle 89. The computer 82 also controls a timing device 93, which is provided in the injection pump 81, based on the computed target value. This rotates the roller ring 85 about the drive shaft 84 within a predetermined range to alter the timing in which the cam plate 86 moves back and forth as it follows the cam rollers 85a. Thus, the roller ring 85 alters the timing at which the reciprocating of the cam plate 86 is initiated. As a result, this enables the timing of commencing fuel injection from the nozzle 89 to be controlled.

A speed sensor 94 provided in the injection pump 81 detects the engine speed, which is one of the parameters related to the operating state of the engine 83. The engine speed corresponds to the rotating speed of the engine crankshaft. The sensor 94 includes a pulser 95, which is installed on the drive shaft 84, and a pickup coil 96, which is arranged opposed to the pulser 95. The pulser 95 is disk-like and has a plurality of indicia, which are projections projecting from its circumferential surface. A predetermined interval is provided between each adjacent pair of projections. As the pulser 95 rotates integrally with the drive shaft 84, each projection passes by the pickup coil 96. The pickup coil 96 outputs a pulse signal as each projection passes by. The position at which each pulse signal is output during a single rotation of the pulser 95 accurately corresponds to the operating state of the engine 83, or the suction, compression, combustion, and exhaust strokes that are executed during two rotations of the crankshaft. In other words, the sensor 94 indirectly detects the rotational angle of the crankshaft, or the alteration in the crank angle, based on the rotation of the drive shaft 84 in the injection pump 81. The pickup coil 96 is provided integrally with the roller ring 85. Accordingly, the pickup coil 96 moves with respect to the pulser 95 when the timing device 93 rotates the roller ring 85.

In such an electronic controlled diesel engine, it is necessary to prevent undesirable engine emissions that may be caused by wear or by malfunctions of certain parts in the engine. Misfires in the engine 83 is one of the factors that may cause undesirable engine emissions. Misfire refers to a state in which the injected fuel does not burn properly in the combustion chamber. Accordingly, it is necessary to accurately detect misfires to prevent undesirable engine emissions.

Japanese Unexamined Patent Publication 63-154841 describes a method for detecting misfires in an electronic controlled diesel engine shown in Fig. 8. In this method, misfires are detected based on successive pulse signals that are output by the pickup coil 96. More specifically, the length of time between successive pulse signals corresponding to successive combustion strokes is computed. The computed time length is compared with a predetermined reference value to determine whether a misfire has taken place. That is, the occurrence of misfires is judged from changes in the pulse time length under the assumption that the engine speed slows down when there is a misfire.

However, the employment of the above detecting method has a disadvantage. That is, since the pickup coil 96 moves integrally with the roller ring 85, the position of the pulser 95 with respect to the pickup coil 96 changes when the timing device 93 alters the timing of injecting fuel from the injection pump 81. This offsets the phase of the pulse signals with respect to the phase of the corresponding crank angle, or the angle corresponding to the combustion stroke of the engine 83. Thus, the computation of the time lengths between successive pulse signals during the combustion stroke becomes inaccurate. This may cause an erroneous judgement of misfires.

The pickup coil 96 is provided integrally on the roller ring 85 to maintain a consistent relationship between the phase of the pulse signal output from the pickup coil 96 and the phase of the reciprocation of the plunger 87 regardless of the rotation of the roller ring 85. The pickup coil 96 and the roller ring 85 control the amount of fuel injected from the injection pump 81 and are thus indispensable in the injection pump 81. Therefore, it is required that misfire be detected without changing the structure of the injection pump 81.

Accordingly, it is an objective of the present invention to provide an apparatus for detecting misfires in an electronic controlled diesel engine that prevents an erroneous detection of misfires.

To achieve the above objective, the present invention provides an apparatus for detecting misfire in an electronic controlled diesel engine. The engine has a crankshaft, a combustion chamber, an injection nozzle for injecting fuel into the combustion chamber, an injection pump driven by the crankshaft and used to pressurize and discharge the fuel toward the nozzle. The diesel engine performs combustion of the fuel to rotate and drive the crankshaft. The injection pump has a drive shaft that is driven synchronously with the rotation of the crankshaft, a cam means operated synchronously with the rotation of the drive shaft to aid the discharge of the fuel, a timing altering means for altering the operating timing of the cam means so as to change the discharge timing of the fuel by moving the cam means, a rotating body provided with indicia located at predetermined intervals, a speed detecting means which includes the rotating body for detecting the rotating speed of the crankshaft, and a pulse outputting means for outputting a series of pulse signals when detecting the passage of the indicia. The pulse outputting means is moved by the timing altering means together with the cam means to alter the phase of the output pulse signals when the timing is altered. The apparatus includes a control means that controls the timing of the fuel injected from the injection nozzle by electrically controlling the timing altering means, and a computing means for detecting either one of a difference between or ratio of the time length of a first set and the time length of a second set of pulse signals. The order of the pulses in the series of each set is predetermined. The apparatus further includes a determining means for comparing the sum of the time lengths of the pulses of the first set and the sum of the time lengths of the pulses in the second set with each other to judge whether a misfire has occurred in the diesel engine. The apparatus is characterized by an order altering means for changing the predetermined order of the first pulse in the first and second sets of pulse signals in accordance with the amount of change in the injection timing that is changed as the control means controls the timing altering means.

In another aspect of the present invention, the apparatus for detecting misfire is characterized by a compensating means for compensating the comparison results obtained by said determining means.

The features of the present invention that are believed to be novel are set forth with particularity in the appended claims. The invention, together with objects and advantages thereof, may best be understood by reference to the following description of the presently preferred embodiments together with the accompanying drawings in which:

Fig. 1 is a schematic drawing showing an engine system in which an embodiment according to the present invention is employed;

Fig. 2 is a cross-sectional drawing showing the injection pump of Fig. 1;

Fig. 3 is a front view showing the structure of the speed sensor of Fig. 2;

Figs. 4(a) to 4(d) constitute a timing chart showing the rotation of the crankshaft and the phases of the continuous pulse signals;

Fig. 5 is a flowchart showing a routine for detecting misfire;

Fig. 6 is a graph showing function data used to compute the misfire compensation value;

Figs. 7(a) and 7(b) constitute a timing chart showing fluctuations of the crankshaft rotation and the change in engine speed; and

Fig. 8 is a cross-sectional view showing the structure of a prior art injection pump.

An apparatus for detecting misfires in an electronic controlled diesel engine according to the present invention will hereafter be described with reference to the drawings.

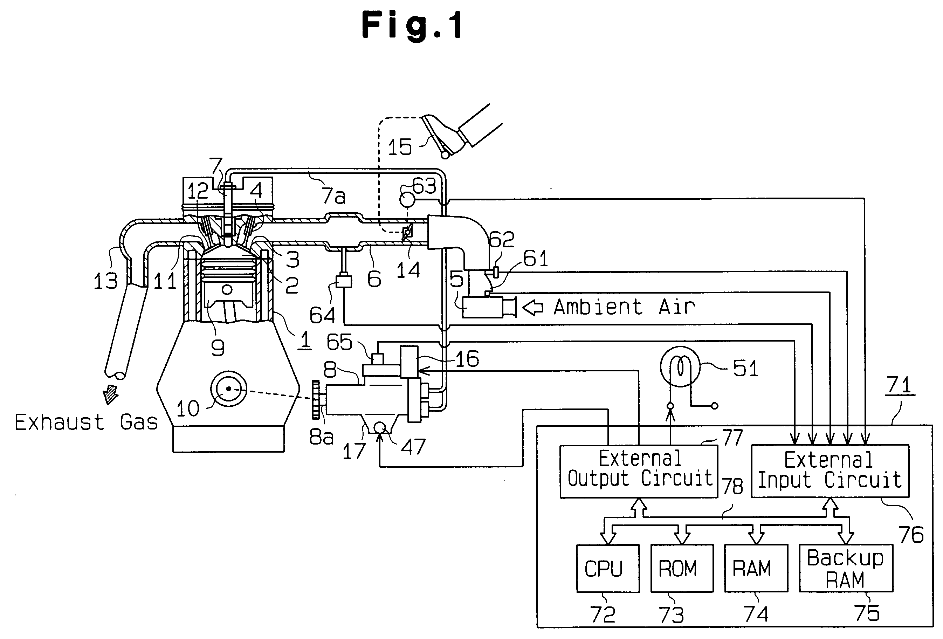

Fig. 1 is a schematic drawing showing an electronic controlled diesel engine 1. The diesel engine 1 has a plurality of cylinders. A combustion chamber 2 is defined in each cylinder. Each cylinder is provided with an intake port 3, an intake valve 4, which opens and closes the port 3, a fuel injection nozzle 7, an exhaust port 11, and an exhaust valve 12, which opens and closes the port 11. A piston 9 is reciprocally accommodated in the cylinder. During the suction stroke, the intake valve 4 opens the intake port 3. This draws ambient air through an air cleaner 5 and into an intake passage 6. The air then flows into the combustion chamber 2. The injection nozzle 7 injects fuel, which is pressurized and sent to the nozzle 7 by a conventional distributor type fuel injection pump 8, via a fuel line 7a, into the combustion chamber 2. During the compression stroke, the piston 9 moves upward and pressurizes the fuel and air in the combustion chamber. This ignites the fuel and air and causes combustion. As a result, the piston 9 is moved downward to rotate a crankshaft 10 and produce drive force in the engine 1. During the exhaust stroke, the exhaust valve 12 opens the exhaust port 11. This discharges the exhaust gas, which is produced in the combustion chamber 2, into an exhaust passage 13, which leads out of the engine 1.

A throttle valve 14 is provided in the intake passage 6. The throttle valve 14 cooperates with the manipulation of a gas pedal 15 and selectively opens and closes the intake passage 6. The operation of the throttle valve 14 adjusts the flow rate of the air drawn into the intake passage 6, or the intake air flow rate Q.

The injection pump 8 pressurizes and sends fuel to each injection nozzle 7 through the fuel line 7a so that the fuel may be burned in the associated combustion chamber 2. The injection pump 8 pressurizes the fuel from a fuel tank (not shown), and discharges the required amount of fuel at a certain timing toward each injection nozzle 7. The injection nozzle 7 then injects fuel into the associated combustion chamber 2. An electromagnetic spill valve 16 is provided in the injection pump 8 to adjust the amount of fuel injected through each nozzle 7 every time the injection pump 8 discharges fuel. A timing device 17 is also provided in the injection pump 8 to adjust the timing for commencing the discharge of fuel from the pump 8, that is, the timing for injecting fuel from each nozzle 7. The timing device 17 constitutes a timing altering means. The spill valve 16 and the timing device 17 are electrically controlled. The injection pump 8 has a drive shaft 8a, which is coupled to a crankshaft 10 of the engine 1. Accordingly, the drive shaft 8a is rotated synchronously with the crankshaft 10. Thus, the injection pump 8 is driven cooperatively with the engine 1.

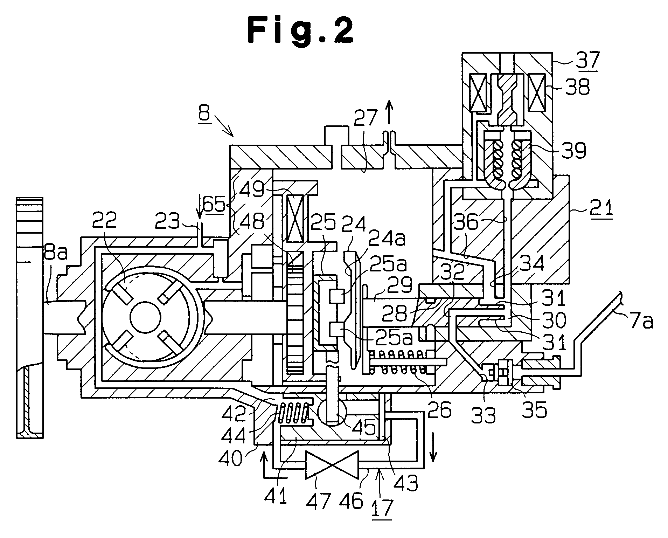

Fig. 2 shows the structure of the injection pump 8. The injection pump 8 has a housing 21. A fuel feed pump 22 (rotated 90 degrees in the drawing to facilitate description) is driven by the drive shaft 8a in the housing 21. The housing 21 also has a fuel port 23 that is connected to the feed pump 22.

The injection pump 8 includes a cam plate 24 and a roller ring 25. The cam plate 24 and the roller ring 25 constitute a cam means. The cam plate 24 is disk-like and coupled to the proximal end (right end as viewed in the drawing) of the drive shaft 8a by a coupling (not shown). A cam face 24a is defined on one side of the cam plate 24 with a plurality of lobes projecting therefrom. The roller ring 25 is arranged opposed to the cam face 24a. A plurality of cam rollers 25a are arranged circumferentially on the roller ring 25. The number of lobes on the cam face 24a corresponds to the number of cylinders in the engine 1. A spring 26 arranged adjacent to the cam plate 24 urges the plate 24 so as the cam face 24a is constantly engaged with the cam rollers 25a.

A fuel chamber 27 and a barrel 28 are provided in the housing 21. A plunger 29 is coupled integrally with the cam plate 24 and accommodated in the barrel 28. The rotating force of the drive shaft 8a is transmitted to the cam plate 24. This rotates the cam face 24a that is engaged with the cam rollers 25a. Thus, the cam plate 24 reciprocates axially (horizontally as viewed in the drawing). The number of reciprocation during a single rotation of the cam plate 24 corresponds to the number of cylinders in the engine 1. The rotation and reciprocating movement of the cam plate 24 rotates and reciprocally moves the plunger 29 in an integral manner. Accordingly, the plunger 29 moves forward (toward the right as viewed in the drawing) in the barrel 28 as the lobes of the cam face 24a engage the cam rollers 25a and moves backward (toward the left as viewed in the drawing) in the barrel 28 as the lobes move off the cam rollers 25a.

In the barrel 28, a pressure chamber 30 is defined between the distal end of the plunger 29 and the opposed wall of the barrel 28. A plurality of intake grooves 31 and distribution ports 32 are defined in the distal and outer circumferential surface of the plunger 29. The number of the intake grooves 31 and the distribution ports 32 correspond to the number of cylinders in the engine 1. A plurality of distribution passages 33 and an intake port 34 are defined in the housing 21 at locations corresponding to the intake grooves 31 and distribution ports 32. A delivery valve 35 is provided at the outlet of each distribution passage 33. The delivery valve 35 is opened in accordance with the fuel pressure in the associated distribution passage 33.

When the feed pump 22 is driven by the rotation of the drive shaft 8a, the fuel from the fuel tank is drawn into the fuel chamber 27 through the fuel chamber 23. The backward movement of the plunger 29 during the rotation of the drive shaft 8a decreases the pressure in the pressure chamber 30. The fuel in the fuel chamber 27 is drawn into the pressure chamber 30 when each intake groove 31 is communicated with the intake port 34. The forward movement of the plunger 29 pressurizes the pressure chamber 30. This pushes out the fuel in the pressure chamber 30 through each distribution passage 33. The associated delivery valve 35 is then opened to discharge the fuel into the associated fuel line 7a.

A spill passage 36 is defined in the housing 21 to connect the pressure chamber 30 with the fuel chamber 27. An electromagnetic spill valve 37 is provided in the spill passage 36. The spill valve 37 includes a coil 38 and a valve body 39. The spill valve 37 is normally opened. When the coil 38 is deenergized, the valve body 39 opens the spill passage 36 and releases the fuel in the pressure chamber 30 into the fuel chamber 27. When the coil 38 is energized, the valve body 39 closes the spill passage 36 and stops the flow of fuel from the pressure chamber 30 to the fuel chamber 27.

Accordingly, the flow of fuel released into the fuel chamber 27 from the pressure chamber 30 is adjusted by controlling the spill valve 37. When the spill valve 27 opens the spill passage 36 during the forward movement of the plunger 29, the pressure decreases in the pressure chamber 30. This stops the discharge of fuel from the injection pump 8 and ends the injection of fuel from the injection nozzle 7. Accordingly, the terminating timing of fuel injection is controlled.

A timing device 17 (rotated 90 degrees in the drawing to facilitate description) is provided in the housing 21. The timing device 17 rotates the roller ring 25 about the drive shaft 8a. This alters the timing at which the lobes on the cam face 24a engage the cam rollers 24. Thus, the displacement of the roller ring 25 alters the timing at which the reciprocating of the plunger 29 is initiated. As a result, this adjusts the timing of commencing fuel injection from each nozzle 7.

The timing device 17 includes a housing 40 and a piston 41, which is accommodated in the housing 40. A pressure chamber 42 is defined in the housing 40 at one side of the piston 41 and a pressurizing chamber 43 is defined at the other side of the piston 41. A portion of the fuel that is pressurized by the feed pump 22 is drawn into the pressure and pressurizing chambers 42, 43. The pressurized fuel acts on the piston 41. A spring 44 is arranged in the pressure chamber 42 to urge the piston 41 toward the pressurizing chamber 43. A slide pin 45 extends upward from the piston 41 and is coupled to the roller ring 25. The fuel pressure in the pressurizing chamber 43 moves the piston 41 and inclines the slide pin 45. This rotates the roller ring 25 about the drive shaft 8a. The position of the piston 41 is determined by the balanced relationship between fuel pressure in the pressurizing chamber 43 and the urging force of the spring 44. This, in turn, determines the rotational position of the roller ring 25 to adjust the timing at which the cam plate 24 and the plunger 29 commences the forward movement. The timer device 17 further includes a timing control valve (TCV) 47, which is provided in a communication passage 46 extending between the pressure chamber 42 and the pressurizing chamber 43. The TCV 46 adjusts the flow rate of the fuel in the communicating passage 46 to adjust the fuel pressure in the pressurizing chamber 43. This controls the position of the piston 41 and thus controls the timing of initiating fuel injection from each nozzle 7.

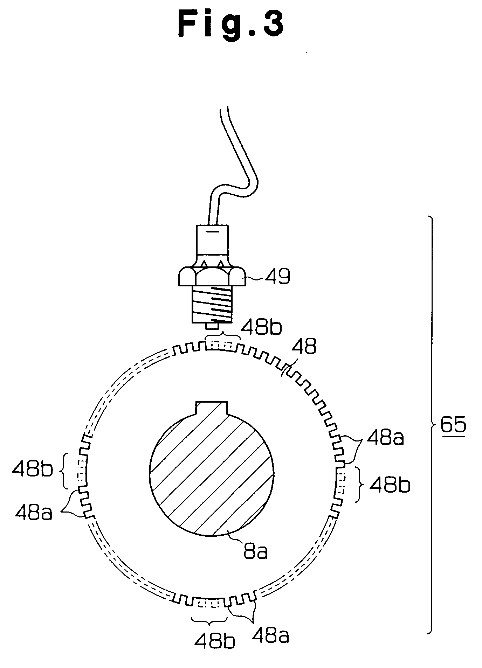

A pulser 48, which serves as a rotating body, is secured on the drive shaft 8a so as to rotate integrally with the shaft 8a. A pickup coil 49, which serves as a pulse outputting means, is opposed to the circumferential surface of the pulser 48. The pulser 48 and the pickup coil 49 constitute a speed sensor 65, which serves as a speed detecting means for detecting the rotating speed of the crankshaft 10, or the engine speed NE. As shown in Fig. 3, the pulser 48 has a plurality of indicia, or projections 48a (56 projections in this embodiment), that project from its circumferential surface. An equal interval is provided between each pair of adjacent projections 48a. Among the projections 48a on the circumferential surface of the pulser 48, there are gaps 48b at which two projections 48a are missing. There are four such gaps 48b in this embodiment. The number of gaps 48b is the same as the number of the cylinders in the engine 1. An equal interval is provided between each pair of adjacent gaps 48b.

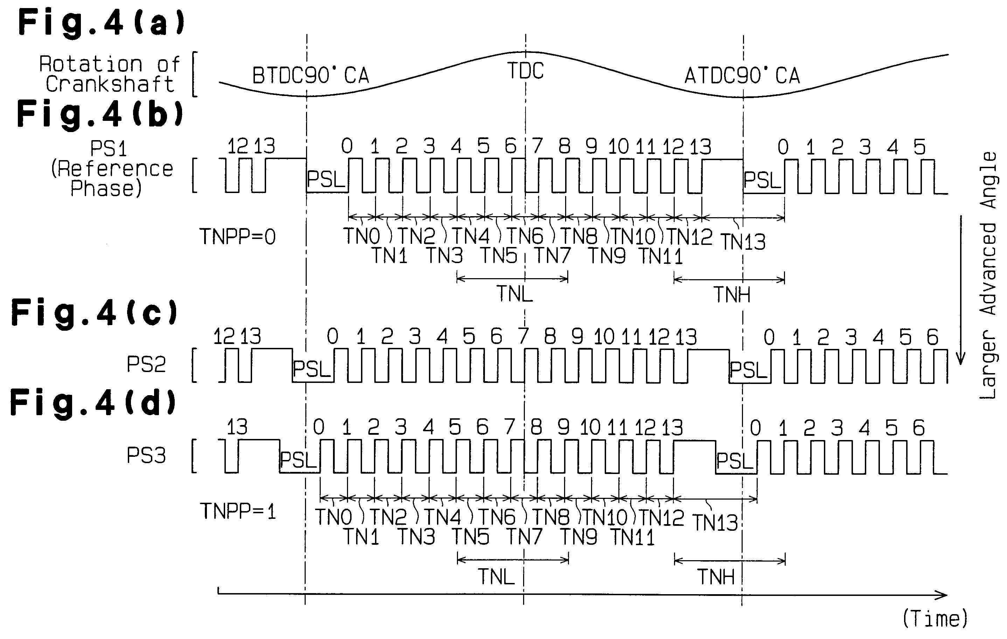

Figs. 4(a) to 4(d) constitute a timing chart that shows the rotation of the crankshaft 10 and the alteration in the output of the related pulse signals PS (PS1 to PS3) from the pickup coil 49 for different injection timings. As shown in Fig. 4(a), the crankshaft 10 rotates and alters its phase in a cyclic manner. The phase alteration is causes by the cyclic reciprocation of the piston 9 in each cylinder during operation of the engine 1. The pickup coil 49 outputs a pulse signal PS as each projection 48a passes thereby. Thus, except for the times when the gaps 48b pass the pickup coil 49, a single pulse signal is output when the crankshaft 10 rotates a predetermined angle, or crank angle CA (in this embodiment, 11.25 degrees). The signal does not rise (the gap signal PSL) when a gap 48b passes by the pickup coil 49. The gap signals PSL correspond to the vicinity of a phase on the crankshaft 10 that is located 90 degrees before the phase corresponding to the top dead center (BTDC 90°) and to the vicinity of another phase located 90 degrees after the top dead center position TDC (ATDC 90°). A total of fourteen pulse signals PS (pulse signal no. 0 to pulse signal no. 13) are produced between the range of BTDC 90° and ATDC 90°. The engine speed NE is obtained based on the time length between two certain pulse signals PS.

The pickup coil 49 is provided integrally with the roller ring 25 to maintain a consistent relationship between the phase of the pulse signals PS output from the pickup coil 49 and the phase of the reciprocation of the plunger 29 regardless of the rotational position of the roller ring 25. However, when the timing device 17 rotates the roller ring 25, the relationship between the phase of the pulse signals PS and the rotational phase of the crankshaft 10 changes. If the timing device 17 gradually advances the timing for discharging fuel from the fuel pump 8, the phase of the sequential pulse signals PS is altered to the state shown in Fig. 4(c) and then to the state shown in Fig. 4(d).

An air flow meter 61 is provided adjacent to the air cleaner 5 to detect the intake air flow rate Q of the air drawn into the intake passage 6. An intake air temperature sensor 62 detects the temperature of the ambient air drawn into the intake passage 6, or the intake air temperature THA, and outputs a corresponding signal. A throttle sensor 63 is provided in the vicinity of the throttle valve 14 to detect the opening amount ACCP of the valve 14, which is associated with the pressed distance of the gas pedal 15. The throttle sensor incorporates a conventional idle switch (not shown). The idle switch is activated to output an idle signal IDL when the throttle valve 14 is completely closed, that is, when the gas pedal 15 is not pressed. An intake air pressure sensor 64 provided in the intake passage 6 detects the intake air pressure PM and outputs a corresponding signal. The speed sensor 65 indirectly detects the rotating speed of the crankshaft 10, or the engine speed NE, based on the rotation of the drive shaft 8a. That is, the pulse signals PS correspond with the engine speed NE.

A warning lamp 51 is provided on an instrument panel arranged in front of the driver's seat to warn the driver of the occurrence of misfire in the engine 1.

The signals output from the sensors 61, 62, 63, 64, 65 are input into an electronic control unit (ECU) 71, which serves as a control means, a computing means, a comparing means, an order altering means, a compensating means, and a determining means. The ECU 71 controls the electromagnetic spill valve 16, the TCV 47 in the injection pump 8, and the warning lamp 51.

As shown in Fig. 1, the ECU 71 includes a central processing unit (CPU) 72, a read only memory (ROM) 73, a random access memory (RAM) 74, and a backup RAM 75. The ECU 71 constitutes a logic computing circuit by connecting the CPU 72, the ROM 73, the RAM 74, and the backup RAM 75 to an input circuit 76 and an output circuit 77 with a bus 78. The CPU 72 is provided with a computing control function and a counting function. A predetermined control program, among other programs, is stored in the ROM 73. Computation results of the CPU 72, among other data, are temporarily stored in the RAM 74. Data is stored beforehand in the backup RAM 75. The input circuit 76 includes a buffer, a waveform shaping circuit, and an analog to digital (A/D) converter. The output circuit 77 includes a drive circuit. The sensors 61, 62, 63, 64, 65 are connected to the input circuit 76. The electromagnetic spill valve 16, the TCV 47, and the warning lamp 51 are connected to the output circuit 77.

The CPU 72 reads the input value of the signals sent from the sensors 61, 62, 63, 64, 65 by way of the input circuit 76. Based on the input values, the CPU 72 controls the electromagnetic spill valve 16, the TCV 47, and the warning lamp 51 to control the amount of injected fuel, the injection timing, and the detection of misfires.

The fuel injection amount control refers to the control of the electromagnetic spill valve 16 for controlling the injection amount discharged from the injection pump 8 in accordance with the operating state of the engine 1. Through the injection amount control, the CPU 72 computes the final injection amount QFIN, which is used to control the electromagnetic spill valve 16 based on the intake air flow rate Q, the intake air temperature THA, the throttle opening amount ACCP, the intake air pressure PM, and the engine speed NE that are detected by the sensors 61, 62, 63, 64, and 65, respectively. The ECU 71 thus serves as an injection amount control means.

The fuel injection timing control refers to the control of the TCV 47 (the timing device 17) for controlling the timing of initiating the discharge of fuel from the injection pump 8 in accordance with the operating state of the engine 1. Through the injection timing control, the CPU 72 computes an advance angle value AACT that is used to control the TCV 47 based on the parameters of the throttle opening amount ACCP and the engine speed NE that are detected by the sensors 63 and 65, respectively. The ECU 71 thus serves as a control means.

The misfire detecting control refers to the detection of misfires in the engine 1 based on fluctuations of the engine speed NE. The fluctuations are detected from the pulse signals PS that are output from the speed sensor 65 (pickup coil 49).

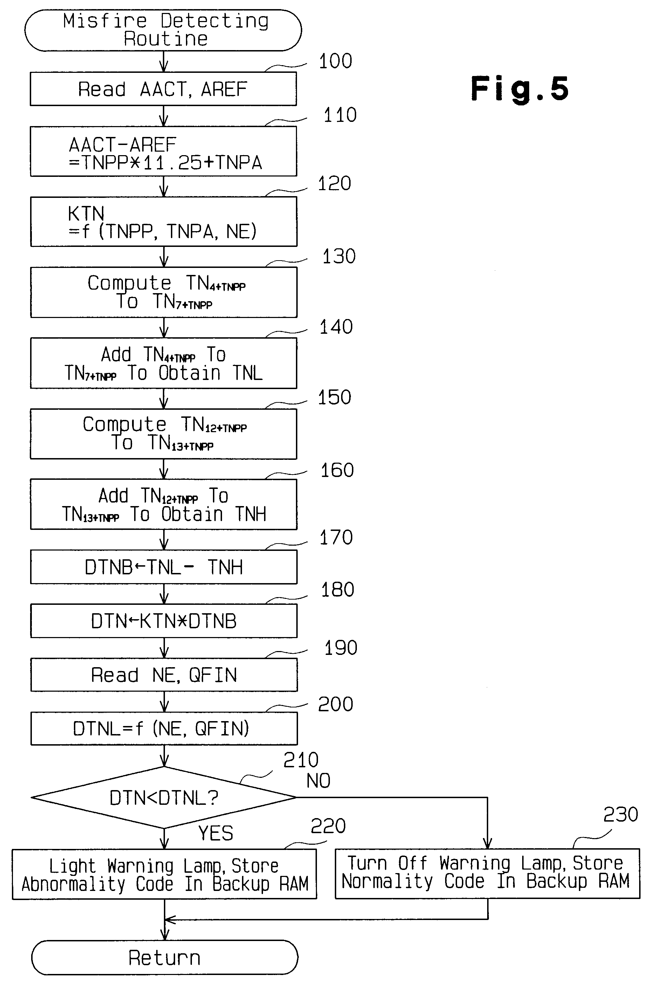

Among the various controls executed by the ECU 71, the misfire detection control will now be described. The ROM 43 includes a control program that is related to the flowchart shown in Fig. 5, which is a misfire detection routine. The ECU 71 executes the routine periodically for every predetermined time interval.

In step 100, the ECU 71 reads the advance angle value AACT, which is computed during the injection timing control, and a reference advance angle AREF. The reference advance angle AREF corresponds to a predetermined constant angle that is adequate for determining whether misfires have occurred. For example, the reference advance angle AREF may be the advance angle when the engine is idling.

In step 110, the ECU 71 computes the difference between the advance angle value AACT and the reference advance angle AREF to obtain a pulse signal sum TNPP and a remainder angle TNPA of the pulse signal, which is smaller than a complete signal. The difference between the parameters AACT, AREF corresponds to the alteration of the injection timing as the timing device 17 rotates and advances the angle of the roller ring 25. The ECU 71 performs the computation through equation (1), as described below.

$$AACT\text{-}AREF=TNPP\times11.25+TNPA \qquad (1)$$

Step 110 executed by the ECU 71 corresponds to a converting means for converting the altered injection timing to the pulse signal sum TNPP and the remainder angle TNPA.

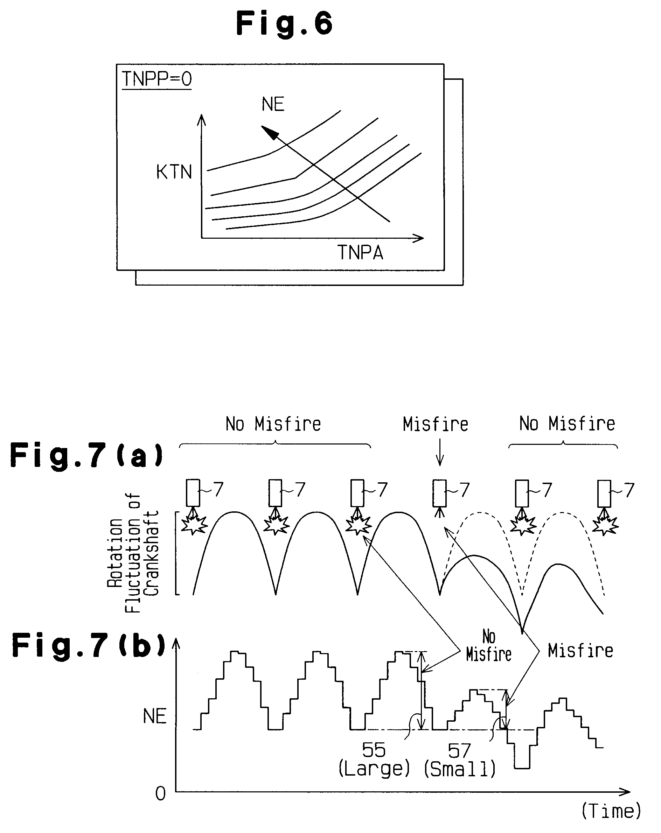

At step 120, the ECU 71 computes an advance angle compensation value KTN from a function, the parameters of which are the computed pulse signal sum TNPP, remainder angle TNPA, and the engine speed NE. The ECU 71 refers to function data, as shown in Fig. 6, to compute the advance angle compensation value KTN. In the function data, the relationship between the remainder angle TNPA, the engine speed NE, and the advance angle compensation value KTN is predetermined for each differing pulse signal sum TNPP. Step 120 serves as a compensation value computing means. The compensation value is used to compensate a basic misfire value DTNB in step 180.

At step 130, the ECU 71 computes the pulse time length TN of each of the pulse signals PS starting with the pulse signal having the order indicated by the sum TNPP plus four (4+TNPP) and ending after the pulse signal having the order indicated by the sum TNPP plus seven (7+TNPP). The pulse time length TN refers to the time length between the rise of a certain pulse signal PS and the rise of the subsequent pulse signal PS.

The pulse signals PS1, shown in Fig. 4(b), correspond to a reference phase in which there is no advance in angle. Pulse time lengths TN0 to TN13 are obtained for each of the associated pulse signal nos. 1 to 13 of the sequential pulse signals PS1. In the reference phase, the position at which each pulse signal PS is produced corresponds accurately with a particular phase of the crankshaft 10. In other words, in the reference phase, pulse signal no. 6 indicates the rotational phase of the crankshaft 10 that corresponds with the top dead center position TDC. The position at which pulse signal no. 13 is produced indicates the rotational phase of the crankshaft 10 that corresponds with either BTDC90°, which is located 90 degrees before the top dead center position TDC, or ATDC90°, which is located 90 degrees after the top dead center position TDC.

When the injection timing is altered, the phase of the pulse signals PS is offset with respect to the rotational phase of the crankshaft 10. As shown in Fig. 4(c), an increase in the phase offset amount changes the order of the pulse signal PS that corresponds to the top dead center position TDC from no. 6 to no. 7. As shown in Fig. 4(d), a further increase in the phase offset amount further delays the order of the pulse signal PS corresponding to the top dead center position TDC from no. 7 to no. 8. In this manner, the phase offset shifts the order of the pulse signal PS that corresponds to the top dead center position TDC.

Accordingly, in step 130, the ECU 71 computes the individual pulse time lengths $TN_{4+TNPP}$ through $TN_{7+TNPP}$ The pulse time lengths $TN_{4+TNPP}$ through $TN_{7+TNPP}$ take into account the alteration of the injection timing. Step 130 executed by the ECU 71 serves as a first pulse time length computing means for computing each of the time lengths $TN_{4+TNPP}$ through $TN_{7+TNPP}$

At step 140, the ECU 71 adds the first set of time lengths $TN_{4+TNPP}$ to $TN_{7+TNPP}$ to obtain a first accumulated time length TNL as shown in Figs. 4(a) to (c). Step 140 executed by the ECU 71 serves as a first accumulated time length computing means for computing the accumulated pulse time length of the time lengths $TN_{4+TNPP}$ through $TN_{7+TNPP}$

At step 150, the ECU 71 computes the pulse time length TN of each of the pulse signals PS starting with the pulse signal having the order indicated by the sum TNPP plus twelve (12+TNPP) and ending after the pulse signal having the order indicated by the sum TNPP plus thirteen (13+TNPP). In other words, in the reference phase, pulse signal nos. 12 to 13 indicate the rotational phase of the crankshaft 10 that corresponds with position ATDC90°, which is located 90 degrees after the top dead center. The pulse time lengths $TN_{12+TNPP}$ through $TN_{13+TNPP}$ are chosen such that the alteration of the injection timing is taken into consideration. Step 150 serves as a second pulse time length computing means for computing each of the second set of pulse time lengths $TN_{12+TNPP}$ to $TN_{13+TNPP}$

At step 160, the ECU 71 adds the second set of time lengths $TN_{12+TNPP}$ through $TN_{13+TNPP}$ to obtain a second accumulated time length TNH as shown in Fig. 4(d). Step 160 serves as a second accumulated time length computing means for computing the accumulated pulse time length of the time lengths $TN_{12+TNPP}$ through $TN_{13+TNPP}$

At step 170, the ECU 71 computes the difference between the first and second accumulated time lengths TNL, TNH to obtain a basic misfire value DTNB. Thus, the difference between the length of time for rotating the crankshaft 10 by a predetermined angle (11.25 degrees × 4 = 45 degrees) near the top dead center position TDC and the length of time for rotating the crankshaft 10 by a predetermined angle (45 degrees) near position ATDC90°, which is located 90 degrees after the top dead center position TDC, is computed to obtain the basic misfire value DTNB. Step 170 executed by the ECU 71 serves as a difference computing means for computing the difference in the time lengths between the first set of successive pulse signals PS and the second set of successive pulse signals PS. The choice of which particular signals PS are used is predetermined. That is, the order of the first and the last pulses in the set is predetermined according to the advance angle.

Figs. 7 (a) and (b) shown fluctuations in the rotation of the crankshaft 10 and the corresponding engine speed NE detected by the speed sensor 65. A normal state (no misfire) is compared with a state in which misfire takes place. When the fuel injected through the injection nozzle 7 burns sufficiently, the cyclic rotation fluctuation of the crankshaft 10 that occurs immediately after the combustion is substantially the same as the rotation fluctuation that takes place in the previous cycle. In this case, as denoted by reference numeral no. 55, the difference in the engine speed NE corresponds to a large basic misfire value DTNB. This indicates that there is no misfire. On the other hand, when the fuel injected from the injection nozzle 7 burns insufficiently, the cyclic rotation fluctuation of the crankshaft 10 immediately after the combustion becomes smaller than the rotation fluctuation of the previous cycle. In this case, as denoted by reference numeral no. 57, the difference in the engine speed corresponds to a small basic misfire value DTNB. This indicates that misfire has taken place.

At step 180, the ECU 71 multiplies the basic misfire value DTNB with the advance angle compensation value KTN to obtain a final misfire value DTN. Step 180 executed by the ECU 71 serves as a compensating means for compensating the basic misfire value DTNB.

At step 190, the ECU 71 reads the engine speed NE detected by the speed sensor 65 and the final injection amount QFIN, which is obtained through the injection amount control.

At step 200, the ECU 71 computes a misfire judgement value DTNL based on the engine speed NE and the final injection amount QFIN. The misfire judgement value DTNL corresponds with the present operating state of the engine 1. Step 200 computes a reference value for judging the final misfire value DTN.

At step 210, the ECU 71 judges whether the final misfire value DTN is smaller than the misfire judgement value DTNL. Step 210 executed by the ECU 71 serves as a comparing means to compare the difference between pulse time lengths. If the final misfire value DTN is smaller than the misfire judgement value DTNL, the ECU 71 determines that misfire is taking place in the engine 1 and proceeds to step 220.

At step 220, the ECU 71 lights a warning lamp 51 to warn the driver of the occurrence of misfires. The warning process in step 220 executed by the ECU 71 serves as a warning means for warning the driver of misfires. The ECU 71 further stores an abnormality code, which indicates the occurrence of misfire, in the backup RAM 75 and terminates subsequent processing. The storing process in step 220 executed by the ECU 71 serves as a recording means for recording the occurrence of misfire.

If the final misfire value DTN is equal to or greater than the misfire judgement value DTNL in step 210, the ECU 71 judges that there is no misfire in the engine 1 and proceeds to step 230.

At step 230, the ECU 71 turns off the warning lamp 51. The ECU 71 stores a normality code indicating that normal combustion is taking place in the engine 1 in the backup RAM 75 and terminates subsequent processing.

As described above, when the engine 1 is operated, the crankshaft 10 synchronously rotates the drive shaft 8a of the injection pump 8. The plunger 29 is operated synchronously with the rotation of the drive shaft 8a by the cooperation between the roller ring 25 and the cam plate 24. This discharges fuel from the fuel pump 8 and injects fuel into each combustion chamber 2 through the associated injection nozzle 7. The combustion of the fuel injected in each combustion chamber 2 moves the piston 9 and rotates the crankshaft 10.

In the injection pump 8, as the pulser 48 rotates during the rotation of the drive shaft 8a, the plurality of projections 48a and gaps 48b on the pulser 48 pass by the pickup coil 49. As the coil 49 detects each projection 48a, the pickup coil 49 outputs successive pulse signals PS that are correlated with the rotating speed of the crankshaft 10.

For the detection of misfires in the engine 1, the ECU 71 computes the difference between the time length of a first set of successive pulse signals PS with the time length of a second set of successive pulse signals PS. The pulse signals PS chosen for the first set and the second set are predetermined. That is, the order of the first and last pulses in each set is predetermined according to the advance angle. The ECU 71 then compares the obtained difference of the time lengths with a predetermined reference value.

More specifically, the ECU 71 adds the time lengths $TN_{4+TNPP}$ through $TN_{7+TNPP}$ of the associated pulse signal order nos. 4+TNPP through 7+TNPP to compute the first accumulated time length TNL. In the same manner, the ECU 71 adds the time lengths $TN_{12+TNPP}$ through $TN_{13+TNPP}$ of the associated pulse signal nos. 12+TNPP to 13+TNPP to compute the second accumulated time length TNH. The ECU 71 then computes the difference between the first and second accumulated time lengths TNL, TNH to obtain the basic misfire value DTNB. The ECU 71 compensates the basic misfire value DTNB with the predetermined advance angle compensation value KTN to compute the final misfire value DTN. The ECU 71 further computes the misfire judgement value DTNL in accordance with the present operating state of the engine 1. The ECU 71 then compares the final misfire value DTN with the misfire judgement value DTNL to judge whether a misfire has occurred.

The ECU 71 also controls the TCV 47 of the timing device 17 based on the engine speed NE obtained from the pulse signals PS that are output by the speed sensor 65. This rotates the roller ring 25 about the drive shaft 8a. As a result, the timing for discharging fuel from the injection pump 8 is altered with respect to the reference timing. This enables the timing for injecting fuel from each nozzle 7 to be controlled.

When the fuel injection timing is altered, the pickup coil 49 is moved together with the roller ring 25. This changes the phase of the successive pulse signals PS, which are output from the pickup coil 49, with respect to the corresponding phase of the crankshaft 10. As shown in Figs. 4(a) and (b), the phase of the pulse signal nos. 0 to 13 has a certain relationship with the rotational phase of the crankshaft 10 when the injection timing is maintained at the reference timing. That is, a certain pulse, no. 6 in this case, corresponds with the top dead center position. This enables accurate detection of a misfire.

When the injection timing is delayed with respect to the reference timing, as shown in Figs. 4(a), (c), and (d), the phases of the pulse signals PS2, PS3 (nos. 0 to 13) are offset with respect to the rotational phase of the crankshaft 10. This offsets each of the pulse time lengths TN0 to TN13 with respect to the top dead center position TDC and the position ATDC90°. The offset phases has produced errors in the detection of misfires in the prior art.

To prevent such errors, the ECU 71 alters the order of certain pulse signals that are referred to when computing the basic misfire value DTNB. Hence, the ECU 71 computes the difference between the advance angle value AACT and the reference advance angle AREF to obtain the pulse signal sum TNPP and the remainder angle TNPA that correspond to the altered injection timing. The ECU 71 then adds the pulse time length TN of each of the pulse signals PS starting with the pulse signal having the order designated by the sum TNPP plus four (4+TNPP) and ending after the pulse signal having the order designated by the sum TNPP plus seven (7+TNPP) to obtain the first accumulated length TNL. In the same manner, the ECU 71 adds the pulse time length TN of each of the pulse signals PS starting with the pulse signal indicated by the sum TNPP plus twelve (12+TNPP) and ending after the pulse signal (13+TNPP) to obtain the second accumulated length TNH.

Accordingly, when the fuel injection timing is changed, the order of the offset pulse signals PS is altered so that the measured time range corresponds with that of the reference phase. This enables accurate computation of the first and second accumulated values TNL, TNH. This leads to computation of the optimum basic misfire value DTNB. As a result, this enables accurate judgement of misfires and prevents erroneous judgements of misfires.

As described above, the present invention enables detection of misfires through computations carried out by the ECU 71. Thus, a conventional injection pump 8 may be used without undergoing structural modifications.

In the present invention, the ECU 71 compensates the basic misfire value DTNB in accordance with changes in the injection timing. That is, the ECU 71 computes the advance angle compensation value KTN based on the pulse signal sum TNPP and the remainder angle TNPA that correspond with the alteration of the injection timing. The ECU 71 then compensates the basic misfire value DTNB with the advance angle compensation value KTN to obtain the final misfire value DTN, which is used to ultimately judge the occurrence of misfires.

Accordingly, the comparison between the final misfire value DTN and the misfire judgement value DTNL is performed appropriately in accordance with the alteration of the injection timing. As a result, this improves the accuracy of detecting misfires and prevents erroneous detection of misfires.

In the present invention, the warning lamp 51 is lit when a misfire is detected. This immediately informs the driver of the abnormality. Thus, undesirable emissions from the engine 1 may be dealt with early by inspecting the engine 1 and the injection pump 8 when the lamp 51 is lit.

In the present invention, when misfires are detected, the ECU 71 stores an abnormality code, which indicates the occurrence of misfire, in the backup RAM 75. Thus, the history of misfires may be confirmed by reading out the data in the backup RAM 75 during maintenance of the engine 1. This also enables undesirable emissions from the engine 1 to be dealt with at an early stage.

Although only one embodiment of the present invention has been described herein, it should be apparent to those skilled in the art that the present invention may be embodied in many other specific forms without departing from the spirit or scope of the invention. For example, the present invention may also be embodied in the following forms.

(1) In the foregoing description, the final misfire value DTNB, which is used to judge whether a misfire has occurred, is obtained by compensating the basic misfire value DTNB, which corresponds to the difference between the time lengths of sets of pulse signals. However, instead of the basic misfire value DTNB, the misfire judgement value DTNL, which is compared with the basic misfire value DTNL to detect misfires, may be compensated in accordance with the alteration of the injection timing.

(2) In the foregoing description, the final advance angle value DTN is obtained by multiplying the basic misfire value DTNB, which corresponds to the difference between the time lengths of sets of pulse signals, with the advance value compensation value KTN, which corresponds to the alteration of the injection timing. However, the final advance value DTN may be obtained by adding the basic misfire value DTNB to an advance angle compensation value, which is computed in accordance with the alteration of the injection timing.

(3) In the foregoing description, misfire is detected by comparing the difference between the time lengths of sets of successive pulse signals with the predetermined reference value. However, the ratio of the time lengths of sets of pulse signals may instead be compared with a predetermined reference value for the judgement of whether misfires have occurred.

(4) The above embodiment is employed in the injection pump 8 that is provided with an actuator constituted by the electromagnetic valve 37 to control the injection of fuel. However, the present invention may also be employed in an injection pump that is provided with an actuator constituted by a spill ring, which is installed on a plunger, and an electromagnetic solenoid, which moves the ring.

Therefore, the present examples and embodiments are to be considered as illustrative and not restrictive and the invention is not to be limited to the details given herein, but may be modified within the scope of the appended claims.

An apparatus for detecting misfires in an electronic controlled diesel engine (1). The engine (1) has a crankshaft (10), a combustion chamber (2), an injection nozzle (7) for injecting fuel into the combustion chamber (2), an injection pump (8) driven by the crankshaft (10)and used to pressurize and discharge the fuel toward the nozzle (7). A controller (71) controls the timing of the fuel injected from the injection nozzle by electrically controlling a timing altering device (17). The controller (71) detects either one of a difference between or ratio of the time length of a first set and the time length of a second set of pulse signals that is output from the injection pump (8). The order of the first pulse in each set is predetermined. The controller (71) further compares the sum of the time lengths of the pulses of the first set and the sum of the time lengths of the pulses in the second set with each other to judge whether a misfire has occurred in the diesel engine (1). The controller (71) changes the predetermined order of the first pulse in the first and second sets of pulse signals in accordance with the amount of change in the injection timing.

## Claims

1. An apparatus for detecting misfire in an electronic controlled diesel engine (1), the engine (1) having a crankshaft (10), a combustion chamber (2), an injection nozzle (7) for injecting fuel into the combustion chamber (2), an injection pump (8) driven by the crankshaft (10) and used to pressurize and discharge the fuel toward the nozzle (7), said diesel engine (1) performing combustion of the fuel to rotate and drive the crankshaft (10), said injection pump (8) having a drive shaft (8a) that is driven synchronously with the rotation of the crankshaft (10), a cam means (24, 25) operated synchronously with the rotation of the drive shaft (8a) to aid the discharge of the fuel, timing altering means (17) for altering the operating timing of the cam means (24, 25) so as to change the discharge timing of the fuel by moving the cam means (24, 25), a rotating body (48) provided with indicia (48a) located at predetermined intervals, a speed detecting means (48, 49), which includes the rotating body (48), for detecting the rotating speed of the crankshaft (10), pulse outputting means (49) for outputting a series of pulse signals when detecting the passage of the indicia (48a), said pulse outputting means (49) being moved by the timing altering means (17) together with the cam means (24, 25) to alter the phase of the output pulse signals when the timing is altered, said apparatus further including control means (71) that controls the timing of the fuel injected from the injection nozzle (7) by electrically controlling the timing altering means (17), computing means (71) for detecting either one of a difference between or ratio of the time length of a first set and the time length of a second set of pulse signals, the order of the first pulse in each set being predetermined, determining means (71) for comparing the sum of the time lengths of the pulses of the first set and the sum of the time lengths of the pulses in the second set with each other to determine whether a misfire has occurred in the diesel engine (1), **characterized by** order altering means (71) for changing the predetermined order of the first pulse in the first and second sets of pulse signals in accordance with the amount of change in the injection timing that is changed as the control means (71) controls the timing altering means (17).

2. An apparatus for detecting misfire in an electronic controlled diesel engine (1), the engine (1) having a crankshaft (10), a combustion chamber (2), an injection nozzle (7) for injecting fuel into the combustion chamber (2), an injection pump (8) driven by the crankshaft (10) and used to pressurize and discharge the fuel toward the nozzle (7), said diesel engine (1) performing combustion of the fuel to rotate and drive the crankshaft (10), said injection pump (8) having a drive shaft (8a) that is driven synchronously with the rotation of the crankshaft (10), a cam means (24, 25) operated synchronously with the rotation of the drive shaft (8a) to aid the discharge of the fuel, timing altering means (17) for altering the operating timing of the cam means (24, 25) so as to change the discharge timing of the fuel by moving the cam means (24, 25), a rotating body (48) provided with indicia (48a) located at predetermined intervals, a speed detecting means (48, 49), which includes the rotating body (48), for detecting the rotating speed of the crankshaft (10), pulse outputting means (49) for outputting a series of pulse signals when detecting the passage of the indicia (48a), said pulse outputting means (49) being moved by the timing altering means (17) together with the cam means (24, 25) to alter the phase of the output pulse signals when the timing is altered, said apparatus further including control means (71) that controls the timing of the fuel injected from the injection nozzle (7) by electrically controlling the timing altering means (17), computing means (71) for detecting either one of a difference between or ratio of the time length of a first set and the time length of a second set of pulse signals, the order of the first pulse in each set being predetermined, determining means (71) for comparing the sum of the time lengths of the pulses of the first set and the sum of the time lengths of the pulses in the second set with each other to determine whether a misfire has occurred in the diesel engine (1), **characterized by** a compensating means (71) for compensating the comparison results obtained by said determining means.

3. An apparatus according to claim 2, **characterized by that** said determining means (71) determines the difference between the time length of the first set and the second set.

4. An apparatus according to claims 2 or 3, **characterized by that** said determining means (71) compares the difference with a reference value to determine whether a misfire has occurred.

5. An apparatus according to any one of claims 2 to 4, **characterized by that** said compensating means (71) compensates one of the difference and the reference value according to the amount of change in the injection timing prior to making the determination of whether a misfire has occurred.

6. An apparatus according to claim 2, **characterized by that** said determining means (71) determines the ratio of the time lengths of the first set and the second set.

7. An apparatus according to claims 2 or 6, **characterized by that** said determining means (71) compares the ratio with a reference value to determine whether or not a misfire has occurred.

8.  An apparatus according to any one of claims 2, 6, and 7, **characterized by** compensating means (71) for compensating one of the ratio and the reference value according to the amount of change in the injection timing prior to making the determination of whether a misfire has occurred.

9.  An apparatus according to any one of the preceding claims, **characterized by that** said control means (71) uses the detected rotating speed of the crankshaft (10) as an input parameter to control the timing of the injection of fuel.

10. An apparatus according to any one of the preceding claims, **characterized by that** said indicia (48a) are projections projecting from the circumferential surface of the rotating body (48).

# Fig.1

Exhaust Gas

Ambient Air

External Output Circuit

External Input Circuit

CPU  ROM  RAM  Backup RAM

EP 0 790 396 A2

Fig.2

# Fig.3

49

48b

48

48a

48b

48b

48a

8a

65

48b  48a

Fig.4(a)

Rotation of
Crankshaft

Fig.4(b)

PS1
(Reference
Phase)

Fig.4(c)

PS2

Fig.4(d)

PS3

BTDC90°CA

TDC

ATDC90°CA

Larger Advanced Angle

(Time)

**Fig.5**

```
        ┌──────────────────────┐
        │   Misfire Detecting   │
        │       Routine         │
        └──────────┬───────────┘
                   │              100
        ┌──────────▼───────────┐
        │   Read AACT, AREF    │
        └──────────┬───────────┘
                   │              110
        ┌──────────▼───────────┐
        │  AACT-AREF           │
        │  =TNPP*11.25+TNPA    │
        └──────────┬───────────┘
                   │              120
        ┌──────────▼───────────┐
        │  KTN                 │
        │  =f(TNPP, TNPA, NE)  │
        └──────────┬───────────┘
                   │              130
        ┌──────────▼───────────┐
        │  Compute TN₄₊ₜₙₚₚ     │
        │     To  TN₇₊ₜₙₚₚ      │
        └──────────┬───────────┘
                   │              140
        ┌──────────▼───────────┐
        │   Add TN₄₊ₜₙₚₚ To     │
        │ TN₇₊ₜₙₚₚ To Obtain TNL│
        └──────────┬───────────┘
                   │              150
        ┌──────────▼───────────┐
        │  Compute TN₁₂₊ₜₙₚₚ    │
        │     To  TN₁₃₊ₜₙₚₚ     │
        └──────────┬───────────┘
                   │              160
        ┌──────────▼───────────┐
        │   Add TN₁₂₊ₜₙₚₚ To    │
        │ TN₁₃₊ₜₙₚₚ To Obtain TNH│
        └──────────┬───────────┘
                   │              170
        ┌──────────▼───────────┐
        │   DTNB←TNL- TNH      │
        └──────────┬───────────┘
                   │              180
        ┌──────────▼───────────┐
        │   DTN←KTN*DTNB       │
        └──────────┬───────────┘
                   │              190
        ┌──────────▼───────────┐
        │   Read NE, QFIN      │
        └──────────┬───────────┘
                   │              200
        ┌──────────▼───────────┐
        │   DTNL=f(NE, QFIN)   │
        └──────────┬───────────┘
```

Step 130: Compute $TN_{4+TNPP}$ To $TN_{7+TNPP}$

Step 140: Add $TN_{4+TNPP}$ To $TN_{7+TNPP}$ To Obtain TNL

Step 150: Compute $TN_{12+TNPP}$ To $TN_{13+TNPP}$

Step 160: Add $TN_{12+TNPP}$ To $TN_{13+TNPP}$ To Obtain TNH

Step 170: DTNB←TNL− TNH

Step 180: DTN←KTN*DTNB

Step 190: Read NE, QFIN

Step 200: DTNL=f(NE, QFIN)

Step 110: AACT−AREF =TNPP*11.25+TNPA

Step 120: KTN =f(TNPP, TNPA, NE)

210 — DTN<DTNL?  NO

YES    220    230

220: Light Warning Lamp, Store Abnormality Code In Backup RAM

230: Turn Off Warning Lamp, Store Normality Code In Backup RAM

Return

# Fig.6

# Fig.7(a)

No Misfire    Misfire    No Misfire

Rotation Fluctuation of Crankshaft

# Fig.7(b)

No Misfire    Misfire

NE

55 (Large)    57 (Small)

0

(Time)

17

# Fig.8

EP 0 790 396 A2

Computer

Parameters Related
To Operating State
of Engine